# EUROPEAN PATENT APPLICATION

(11) **EP 4 716 069 A2**
(43) Date of publication of application: **25.03.2026**
(21) Application number: 25200751.3
(22) Date of filing: 08.09.2025
(51) Int. Cl.: H02K 1/276, H02K 21/16

(54) **ASYMMETRICAL ROTOR WITH SYMMETRICAL PERFORMANCE**

(30) Priority: 19.09.2024 US 202418890405
(71) Applicant: Nidec Motor Corporation, St. Louis, MO 63136 (US)
(72) Inventor: Bastien, Ryan M., St. Louis, 63136 (US); Corcoran, Marc J., St. Louis, 63136 (US)
(74) Representative: Latham, Stuart Alexander

(57) **Abstract**

A symmetrically performing motor includes an asymmetrical rotor. The rotor includes a core and a plurality of arcuately arranged magnets. The core includes a hub, a plurality of pole segments, and a plurality of bridges extending between and interconnecting respective ones of the pole segments to the hub. Each of the bridges has an axially varying width. The pole segments are swept in form such that the rotor core exhibits mirror asymmetry. Each of the pole segments includes a body, a head disposed radially adjacent the body, and a pair of arcuately spaced apart ears extending generally tangentially outwardly from the head. The head defines an arcuate outer head face extending along an outer rotor margin. Each of the ears defines a respective outer ear face disposed inward of the outer rotor margin. Each of the outer ear faces defines an ear angle relative to the outer rotor margin.

## Description

### BACKGROUND OF THE INVENTION

### 1. Field of the Invention

The present invention relates generally to an electric motor. More particularly, the motor includes an asymmetrical rotor including a plurality of arcuately arranged pole segments and a plurality of arcuately arranged magnets configured and arranged to facilitate symmetrical motor performance.

### 2. Discussion of the Prior Art

Electric motors conventionally comprise a stator and a rotatable rotor. Some motors perform symmetrically. That is, standard performance characteristics of the motor are at least substantially identical in both forward and reverse operational directions. For instance, a symmetrically performing motor will, in operation, produce a symmetrical flux distribution across the air gap between the stator and the rotor, in addition to a producing a symmetrical inductance profile. Alternatively stated, the inductance profile for one electrical cycle is nearly identical in both directions.

Such symmetrical performance conventionally results from symmetrical construction (that is, symmetrical geometry). That is, a rotor facilitating symmetrical motor performance conventionally features both mirror symmetry and symmetry about an axis. Furthermore, symmetry about the axis is conventionally at an angle corresponding to a single pole. That is, a conventional rotor for a symmetrically performing motor includes a plurality of identical, evenly arcuately spaced apart pole segments and a corresponding plurality of identical, evenly arcuately spaced apart magnets therebetween, with each pole segment and magnet being symmetrical across its own radially extending midline.

Introduction of geometrical asymmetry may be desired in certain motors to facilitate improved performance under certain operating conditions, but such irregularities or asymmetries conventionally result in loss of symmetrical motor performance.

### SUMMARY

According to one aspect of the present invention, a rotor for use in an electric motor is rotatable about an axis. The rotor comprises a core and a plurality of arcuately arranged magnets. The core includes a hub, a plurality of pole segments arranged arcuately about the axis, and a plurality of bridges extending between and interconnecting respective ones of the pole segments to the hub. The magnets alternate arcuately with the pole segments, such that each of the magnets is at least in part interposed between a pair of adjacent pole segments. Each of the bridges has an axially varying width.

According to another aspect of the present invention, a symmetrically performing motor comprises a rotor rotatable about an axis. The rotor includes a rotor core and a plurality of magnets. The core includes a plurality of pole segments arranged arcuately about the axis. The pole segments cooperatively define a cylindrical outer rotor margin. Each of the pole segments extends arcuately from a radially inner pole segment midpoint to a radially outer pole segment midpoint, with the radially inner and radially outer pole segment midpoints being angularly offset from each other such that the pole segments are swept in form and the rotor core exhibits mirror asymmetry. The magnets alternate arcuately with the pole segments, such that each of the magnets is at least in part interposed between a pair of adjacent pole segments. Each of the magnets extends arcuately from a radially inner magnet midpoint to a radially outer magnet midpoint, with the radially inner and radially magnet midpoints being angularly offset from each other such that the pole segments are curved in form. Each of the pole segments includes a body, a head disposed radially adjacent the body, and a pair of arcuately spaced apart ears extending generally tangentially outwardly from the head. The head defines an arcuate outer head face extending along the outer rotor margin. Each of the ears defines a respective outer ear face disposed inward of the outer rotor margin. Each of the outer ear faces defines an ear angle relative to the outer rotor margin. The ear angle is between about five (5) degrees and about thirteen (13) degrees. The pole segments and the magnets cooperatively facilitate operation of the motor in both forward and reverse directions with at least substantially identical performance.

This summary is provided to introduce a selection of concepts in a simplified form. These concepts are further described below in the detailed description of the preferred embodiments. This summary is not intended to identify key features or essential features of the claimed subject matter, nor is it intended to be used to limit the scope of the claimed subject matter.

Various other aspects and advantages of the present invention will be apparent from the following detailed description of the preferred embodiments and the accompanying drawing figures.

### BRIEF DESCRIPTION OF THE DRAWING FIGURES

Preferred embodiments of the present invention are described in detail below with reference to the attached drawing figures, wherein:
FIG. 1 is a perspective view of a motor in accordance with a preferred embodiment of the present invention;
FIG. 2 is a perspective view of the motor of FIG. 1, with the motor shell and one endshield removed such that the stator, the rotor core, and the rotor magnets are shown;
FIG. 3 is a partially sectioned, enlarged perspective view of the rotor of the motor of FIGS. 1 and 2;
FIG. 4 is an exploded perspective view of the rotor of FIGS. 2 and 3;
FIG. 5 is an enlarged, sectioned perspective view of a portion of the rotor core of FIGS. 2-4, particularly illustrating the axially varying widths of the bridges;
FIG. 6 is an enlarged, sectioned perspective view of a portion of the rotor core of FIGS. 2- 5, particularly illustrating the axially discontinuous retention nubs;
FIG. 7 is a perspective view of a subset of rotor core laminations of the rotor core of FIGS. 2-6;
FIG. 8 is an exploded perspective view of the rotor core subset of FIG. 7;

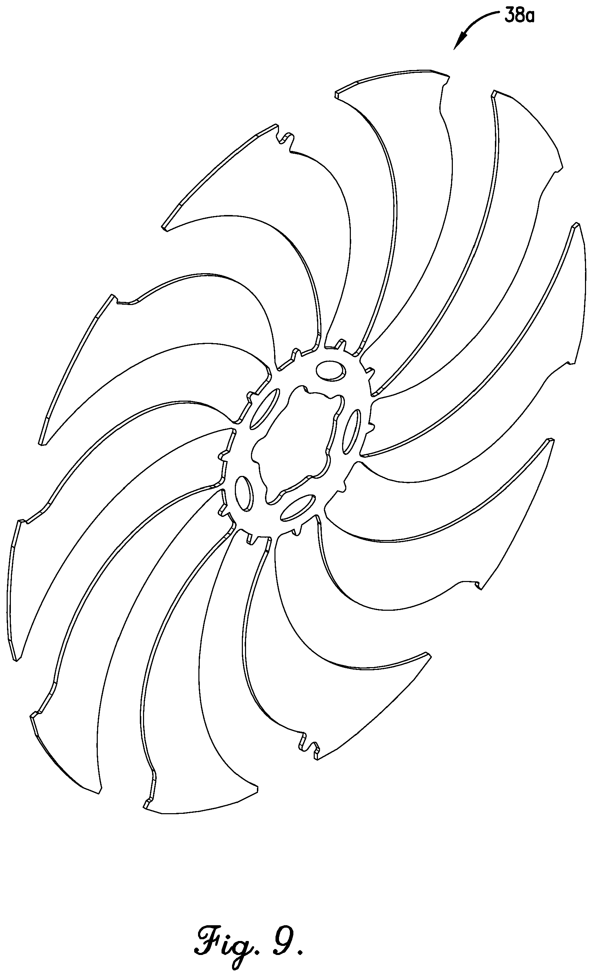

FIG. 9 is an enlarged perspective view of a single lamination of the rotor core of FIGS. 2- 7;
FIG. 10 is a top view of the single rotor lamination of FIG. 9;
FIG. 11 is an enlarged, sectional view of a portion of the single rotor lamination of FIGS. 9 and 10;
FIG. 12 is a perspective view of the stator core of the motor of FIGS. 1 and 2; and
FIG. 13 is an end or top view of the stator core of FIG. 12.

The drawing figures do not limit the present invention to the specific embodiments disclosed and described herein. While the drawings do not necessarily provide exact dimensions or tolerances for the illustrated structures or components, the drawings are to scale with respect to the relationships between the components of the structures illustrated in the drawings.

### DETAILED DESCRIPTION

The present invention is susceptible of embodiment in many different forms. While the drawings illustrate, and the specification describes, certain preferred embodiments of the invention, it is to be understood that such disclosure is by way of example only. There is no intent to limit the principles of the present invention to the particular disclosed embodiments.

Furthermore, unless specified or made clear, the directional references made herein with regard to the present invention and/or associated components (such as top, bottom, upper, lower, inner, and outer) are used solely for the sake of convenience and should be understood only in relation to each other. For instance, a component might in practice be oriented such that faces referred to as "top" and "bottom" are sideways, angled, inverted, for instance relative to the chosen frame of reference.

### Motor Overview

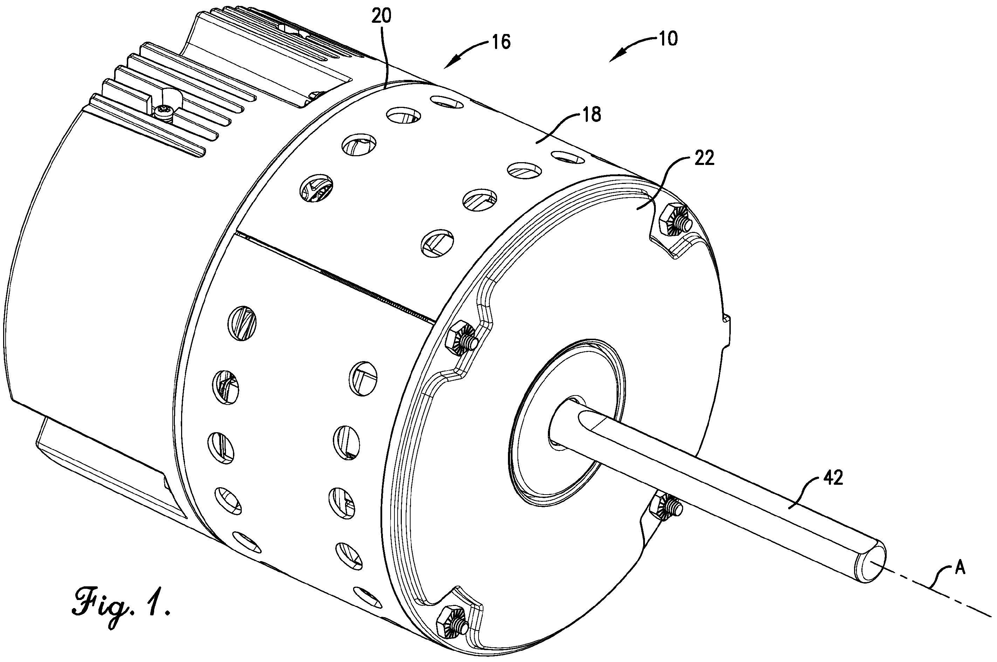

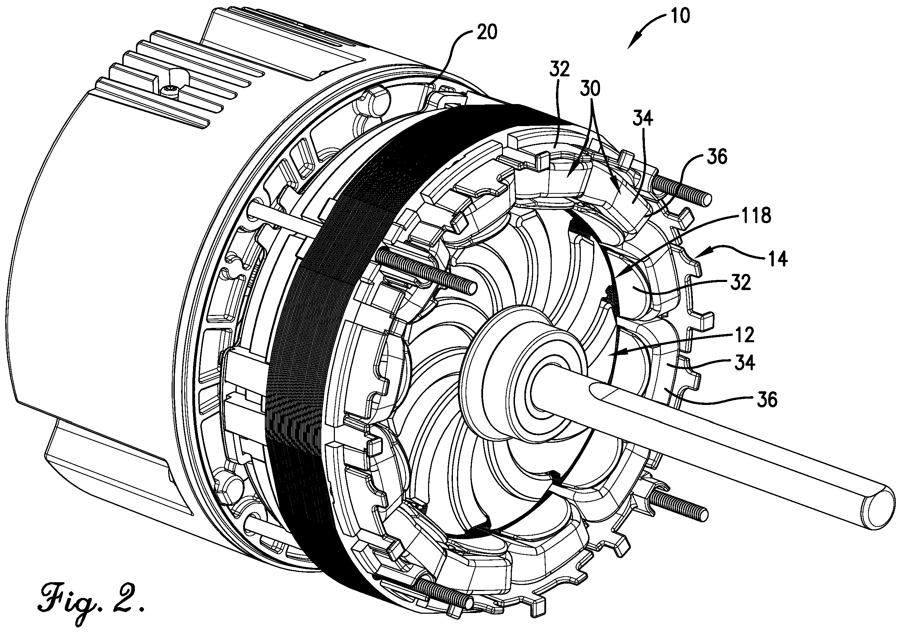

With initial reference to FIGS. 1 and 2, an electric motor 10 is provided. The motor 10 includes a rotor 12 rotatable about an axis "A." The motor 10 further includes a stator 14. The stator 14 preferably at least substantially circumscribes the rotor 12 such that the motor 10 is an inner rotor motor.

The motor 10 further preferably includes a housing 16 including a cylindrical shell 18 extending between and interconnecting a pair of axially opposed endshields 20 and 22. The shell 18 further includes circular vents 19 defined therethrough. The circular vents 19 are configured to facilitate increase stiffness of the cylindrical shell 18.

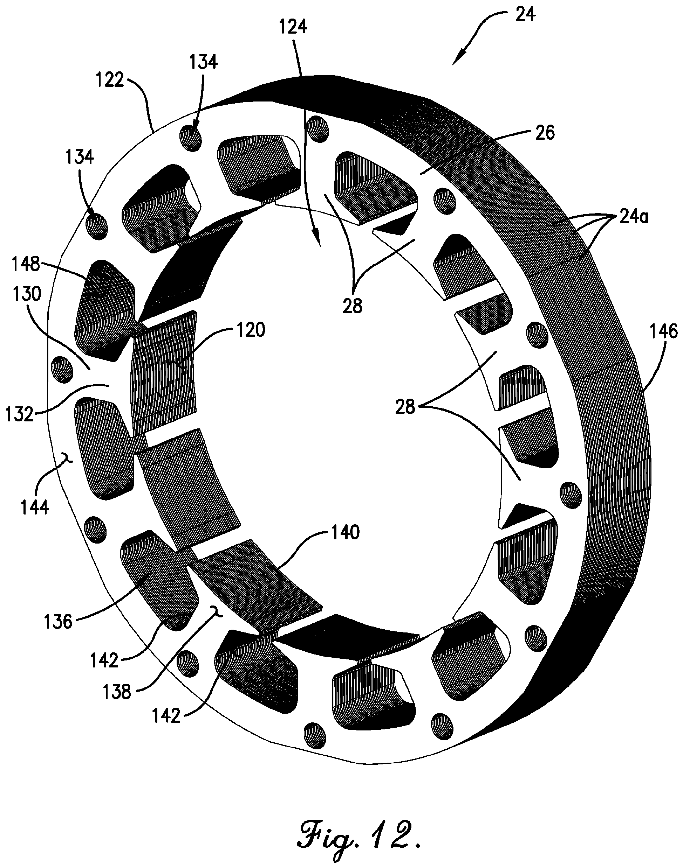

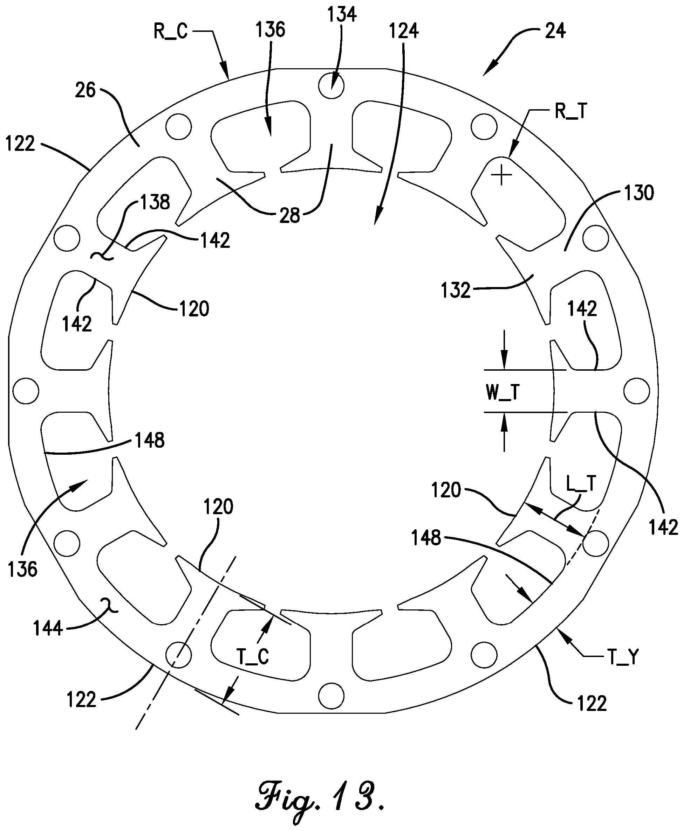

Referring to FIGS. 12 and 13, the stator 14 preferably includes a stator core 24 which preferably includes a yoke 26 and a plurality of arcuately spaced apart teeth 28 extending from the yoke 26. The teeth 28 preferably extend generally radially inwardly from the yoke 26, toward the rotor 12.

Returning to FIG. 2, the stator 14 further preferably includes a plurality of coil assemblies 30 mounted to the stator core 24. More particularly, each coil assembly preferably extends around or circumscribes a respective one of the teeth 28.

Each coil assembly 30 preferably includes an electrically insulative element 32, such as a bobbin, endcap, overmolding, or insulative inserts or wraps (such as Mylar papers). Each coil assembly 30 further preferably includes a plurality of coils 34, each comprising electrically conductive wiring 36 wound about the respective insulative element 32. The wiring 36 preferably comprises copper or aluminum, although other materials fall within the scope of the present invention.

As will be discussed in greater detail below, the illustrated stator core 24 is preferably formed from punched full-round (that is, generally circular or annular) laminations 24a (layers 24a) that are thereafter stacked axially. However, the stator core might be alternatively formed without departing from the scope of the present invention. For instance, the stator core might be formed from linear segments that are bent and connected to one another after being punched, might be solidly constructed, could be formed from segments punched in arcuate form, for instance.

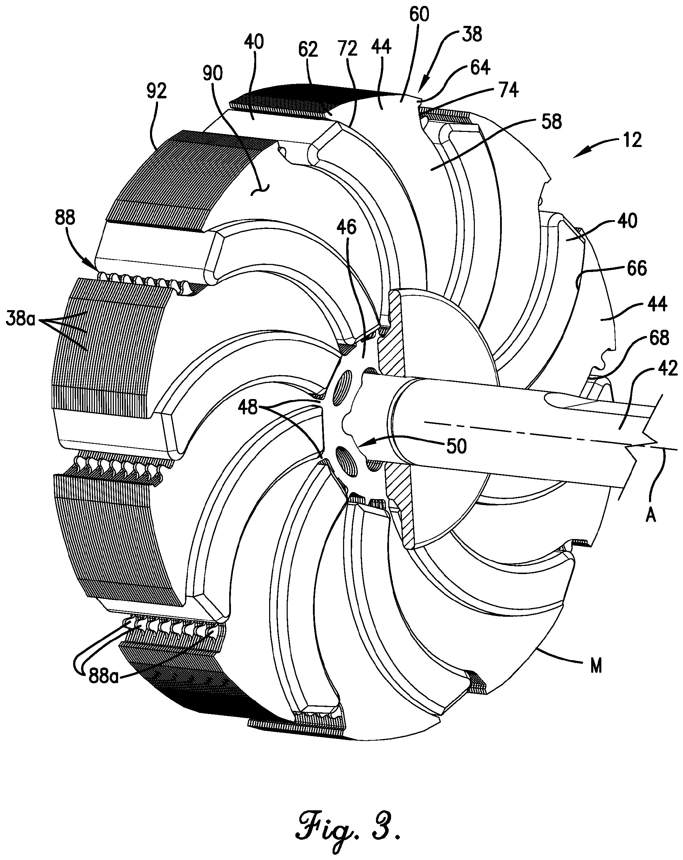

Referring to FIG. 3, the rotor 12 preferably includes a rotor core 38, a plurality of magnets 40, and a shaft 42 defining the rotational axis A for the rotor 12. The rotor core 38 includes a plurality of pole segments 44 arranged arcuately about the axis. The magnets 40 are arranged arcuately so as to alternate arcuately with the pole segments 44. Each of the magnets 40 is thus at least in part interposed between a pair of adjacent pole segments 44.

In a preferred embodiment, the motor 10 is a ten (10) pole motor 10. However, other pole counts fall within the scope of some aspects of the present invention.

The rotor core 38 preferably comprises steel, although other materials may alternatively be used without departing from the scope of the present invention. The magnets 40 are preferably permanent magnets comprising ferrite, although other suitable magnet materials, such as neodymium, may be used according to certain aspects of the present invention.

The rotor core 38 further preferably includes a hub 46 and a plurality of bridges 48 extending between and interconnecting respective ones of the pole segments 44 to the hub 46.

Preferably, as illustrated, the hub 46 is at least substantially toroidal in form to define a central opening 50. The rotor shaft 42 preferably extends through the opening 50 and is suitably fixed to the core 38.

The hub 46 preferably presents inner and outer cylindrical faces 52 and 54 centered about the rotor axis A. The bridges 48 preferably extend from the outer hub face 54. The inner hub face 52 preferably defines the central opening 50.

In the illustrated embodiment, semi-circular reliefs 55 are cut into the hub 46 at the inner cylindrical face 52. That is, the reliefs 55 extend radially outwardly from the inner cylindrical face 52 relative to the rotation of axis A. Alternate forms of reliefs may be provided, however, or the reliefs could be omitted entirely.

The hub 46 also preferably defines a plurality of arcuately spaced cutouts 56. The cutouts 56 in the illustrated embodiment are oval in shape and evenly arcuately spaced apart relative to each other and within the hub 46.

The cutouts 56 and reliefs 55 preferably alternate arcuately with one another (but are offset radially). However, alternative shapes and/or arrangements, both within the set of cutouts and the set of reliefs and between the sets of the cutouts and the reliefs, fall within the scope of some aspects of the present invention.

It is noted that the reliefs 55 and cutouts 56 preferably reduce the weight of the rotor core 38 without (or nearly without) detrimentally affecting flux therethrough. Omission of the reliefs and/or cutouts is permissible, as well.

Furthermore, the hub might be alternatively configured in additional manners without departing from some aspects of the present invention. For instance, the hub might alternatively present a faceted or polygonal outer surface comprising a plurality of flat faces, or the inner opening defined by the hub might be non-circular or keyed in keeping with an alternative shaft formation.

In a preferred embodiment, each of the bridges 48 connects with a corresponding one of the pole segments 44. Furthermore, each pole segment 44 is connected to the hub 46 via a corresponding bridge 48. That is, the number of pole segments 44 is preferably equal to the number of bridges 48. It is permissible according to some aspects of the present invention, however, for the rotor core to include differing numbers of bridges and pole segments.

In the illustrated embodiment, each bridge 48 is disposed in an at least substantially rectangular envelope and extends radially outward from the hub 46, although alternate shapes and/or directions of extension for some or all of the bridges are permissible according to some aspects of the present invention. For instance, the bridges could define a trapezoidal envelope or extend at an angle relative to radial. The bridges 48 will be discussed in greater detail below.

The rotor core 38 further preferably includes a plurality of nubs 57 extending radially outward from the hub 46. The nubs 57 preferably alternate evenly arcuately with the bridges 48, with even spacing being provided from each bridge 48 to adjacent ones of the nubs 57 and vice versa.

Each nub 57 preferably engages a corresponding one of the magnets 40 to restrict shifting thereof in a radially inward direction. However, one or more nubs might be omitted in lieu of alternative magnet retention means such as overmolding, other structural components, for instance Such retention means might also be provided in addition to nubs.

The nubs 57 each preferably include a rounded radially outer end, although alternative geometries are permissible.

### Rotor Core Laminations

As noted previously, the rotor 12 preferably includes the core 38, the magnets 40, and the shaft 42. The core 38 includes the plurality of pole segments 44, the hub 46, the bridges 48, and the nubs 57.

In a preferred embodiment, the rotor core 38 includes a plurality of axially stacked laminations 38a that cooperatively form the pole segments 44, the hub 46, the bridges 48, and the nubs 57. In the illustrated embodiment, for instance, the rotor core 38 comprises laminations 38a that are punched in full-round form. However, segmented laminations fall within the scope of some aspects of the present invention. A solid (non-laminated) rotor may also be provided without departing from the scope of some aspects of the present invention. For instance, fully formed, non-laminated pole segments might be press-fit into a hub using a dovetail joint or other suitable connection. (In such an instance, the hub is preferably but not necessarily formed of a different material than the pole segments.) In another alternative, pole segments might be molded into position in such a manner that "direct" connections between the pole segments and the hub, whether via bridges, jointing, or another technique, are not present. Molding might also be provided supplementarily to another connection or positioning technique.

### Rotation and Stacking of Laminations

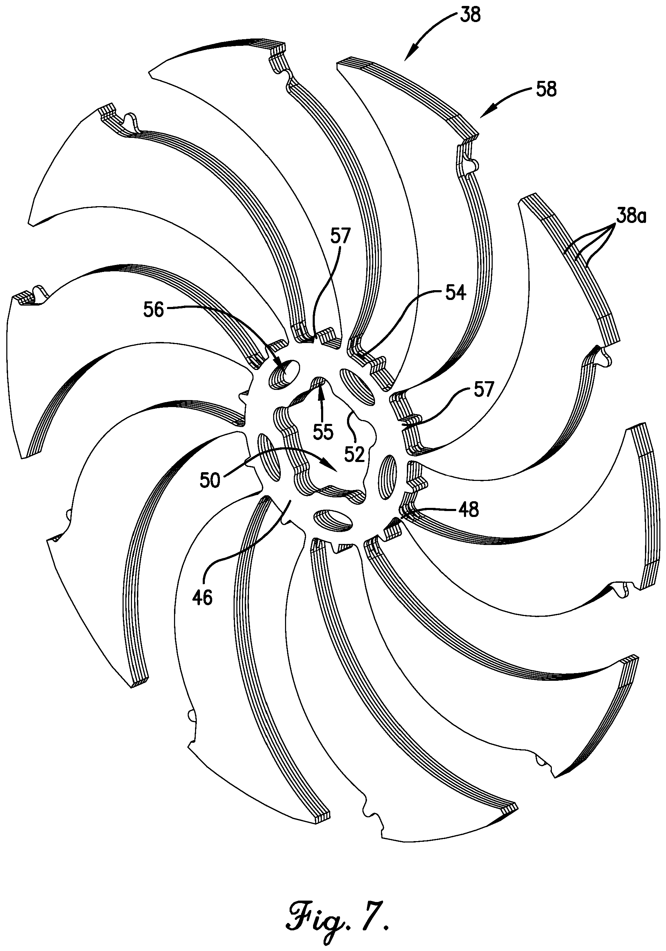

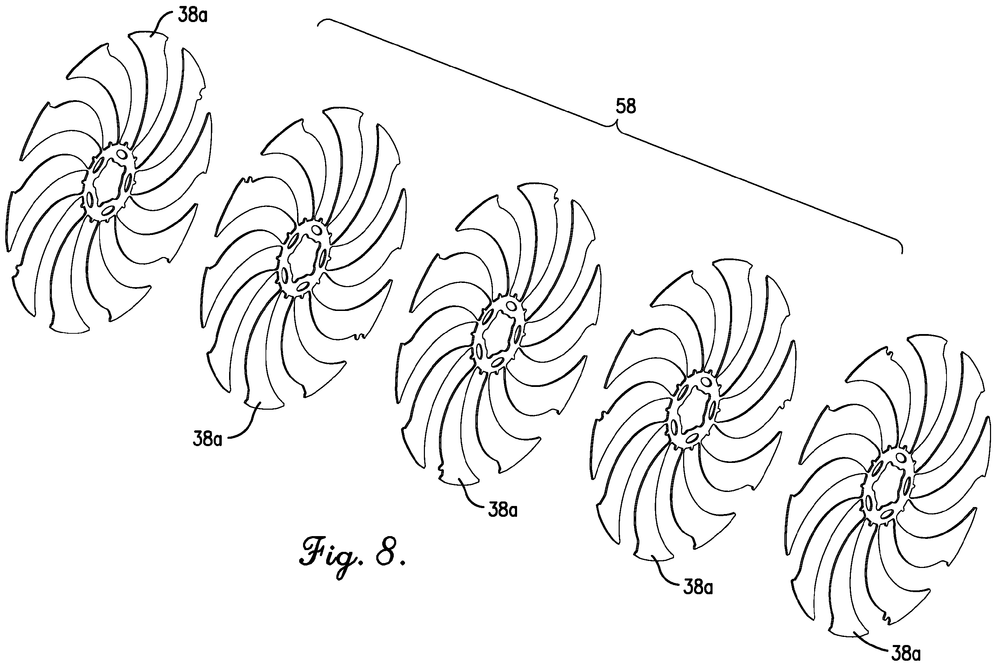

Preferably, the laminations 38a are congruent (identical; having the same shape and size) to one another but, when stacked axially, are rotated relative to one another. In the illustrated embodiment, for instance, axially adjacent laminations 38a are arcuately offset from each other (that is, are rotated relative to one another) by about one hundred eight (108) degrees. As will be apparent to those of ordinary skill in the art and as best shown in FIGS. 7 and 8, such rotation corresponds to three (3) poles in a ten (10)-pole motor 10.

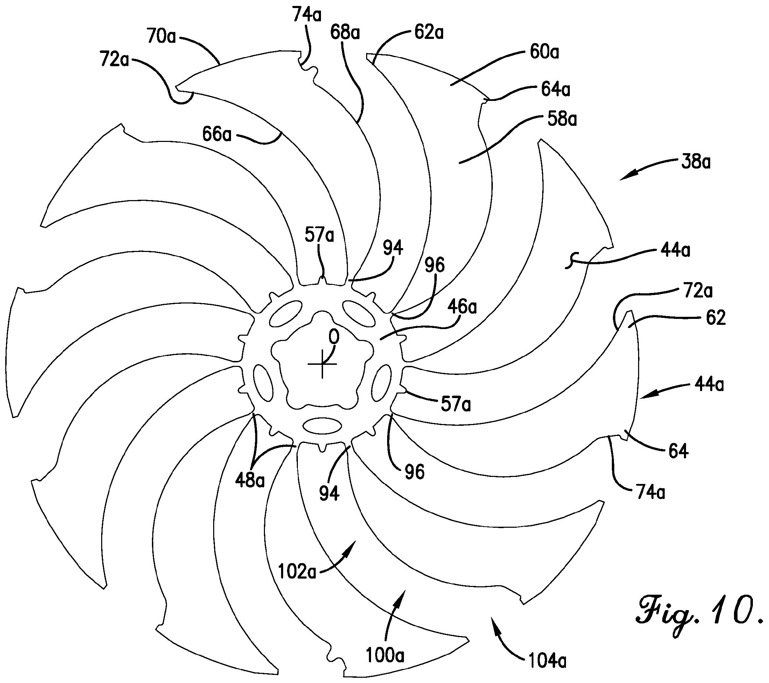

In the illustrated embodiment, each lamination 38a is defined about a central origin O (see FIG. 10) that lies on the axis of rotation A of the rotor 12. Furthermore, each lamination 38a is rotationally symmetrical through the origin O at an angle of rotation of one hundred eighty (180) degrees. That is, the shape of a given lamination 38a is identical after rotation one hundred eighty (180) degrees about the origin O. Thus, as best shown in FIG. 7, a stack of five (5) laminations 38a, each of which is rotated relative to the others as noted above, forms a complete subset 58 in which an axial pattern formed by the rotated and stacked laminations 38a is complete.

In the illustrated rotor core 38, forty (40) total laminations 38a are stacked to form the core 38, with the laminations 38a arranged into eight (8) subsets 58 of five (5) laminations each.

It is noted that various stacking and rotation approaches fall within the scope of some aspects of the present invention. For instance, a rotor might having a different number of poles, a different angular offset between laminations, a different number of laminations per set, and/or a different number of laminations in total. Furthermore, the laminations might be rotationally symmetrical more frequently than one hundred eighty (180) degrees, thus requiring fewer laminations to be provided to complete a set.

### Geometry of Laminations and Rotor Core

As noted previously, the rotor core 38 includes the plurality of pole segments 44, the hub 46, the bridges 48, and the nubs 57. As will be discussed in greater detail below, each lamination 38a likewise preferably includes a plurality of pole segment layers 44a, a hub layer 46a, a plurality of bridge layers 48a, and plurality of nub layers 57a (see, for instance, FIG. 10). The axially stacked pole segment layers 44a, hub layer 46a, bridge layers 48a, and nub layers 57a cooperatively form the pole segments 44, the hub 46, the bridges 48, and the nubs 57.

As will be readily apparent to those of ordinary skill in the art, the geometry/configuration of the rotor core 38 is dependent on and corresponds to the geometry/configuration of the laminations 38a. Therefore, for the sake of brevity and clarity, and unless otherwise specified, descriptions herein that refer to the geometry or configuration of one or more laminations 38a should be understood to apply generally to the rotor core 38 as a whole. Likewise, and also unless otherwise specified, descriptions herein that refer to the geometry or configuration of the rotor core 38 should be understood to apply generally to the individual laminations 38a as well.

Turning now to the overall form of the rotor core 38, the pole segments 44 are preferably generally in the form of curved, swept wedges or triangles extending radially outwardly relative to the axis A, such that the rotor core 38 is pinwheel-like in form. (Likewise, in keeping with the above-described general cross-applicability of descriptions between the rotor core 38 in a broad sense and the laminations 38a individually, each pole segment layer 44a is preferably in the form of a curved, swept wedge or triangle such that the rotor core laminations 38a are pinwheel-like in form.)

More particularly, with reference to FIGS. 3 and 10, each pole segment 44 includes a body 58, a head 60, and a pair of arcuately spaced apart ears 62 and 64, cooperatively formed by respective bodies 58a, heads 60a, and ears 62a and 64a of the pole segment layers 44a. Each body 58 extends radially outward from a corresponding ones of the bridges 48 to the corresponding head 60, with the pole segment 44 undergoing a general arcuate widening or flaring as it expands radially outwardly.

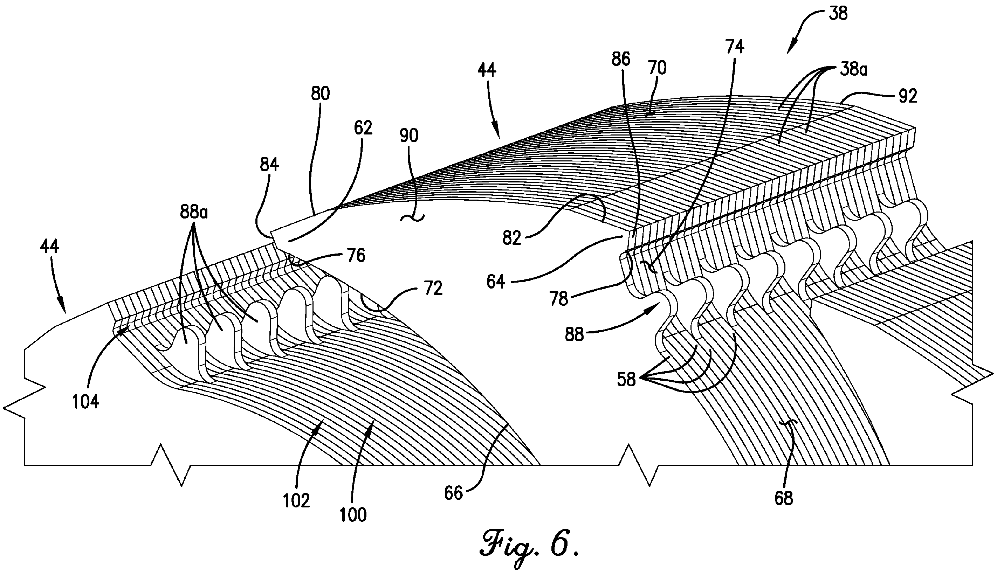

Each body 58 preferably includes first and second arcuately spaced apart side faces 66 and 68, respectively, cooperatively formed by respective side faces 66a and 68a of the body layers 58a (see FIGS. 6 and 10). The first side face 66 preferably extends continuously along an arc. More particularly, the first side face 66 preferably extends continuously along an arc of a circle. Similarly, the second side face 68 preferably extends continuously along an arc. More particularly, the second side face 68 also preferably extends continuously along an arc of a circle.

In greater detail still, the arc of a circle along which the first side face 66 extends preferably presents a radius of curvature that is greater than that of the arc of a circle along which the second side face 68 extends. That is, the first side face 66 preferably extends along a flatter or gentler arc than does the second side face 68, which is more tightly curved. The first side face 66 is therefore longer than the second side face 68.

In a preferred embodiment, adjacent ones of the first and second side faces 66 and 68 of adjacent pole segments 44 are centered on a common center of curvature. That is, the hypothetical circles along which the first and second side faces 66 and 68 extend are concentric.

Each head 60 preferably is disposed radially outward of the corresponding one of the bodies 58. The heads 60 each present a radially outer side 70, a first side 72, and a second side 74 (see FIG. 6), corresponding to radially outer sides 70a, first sides 72a, and second sides 74a of the head layers 60a (see FIG. 10).

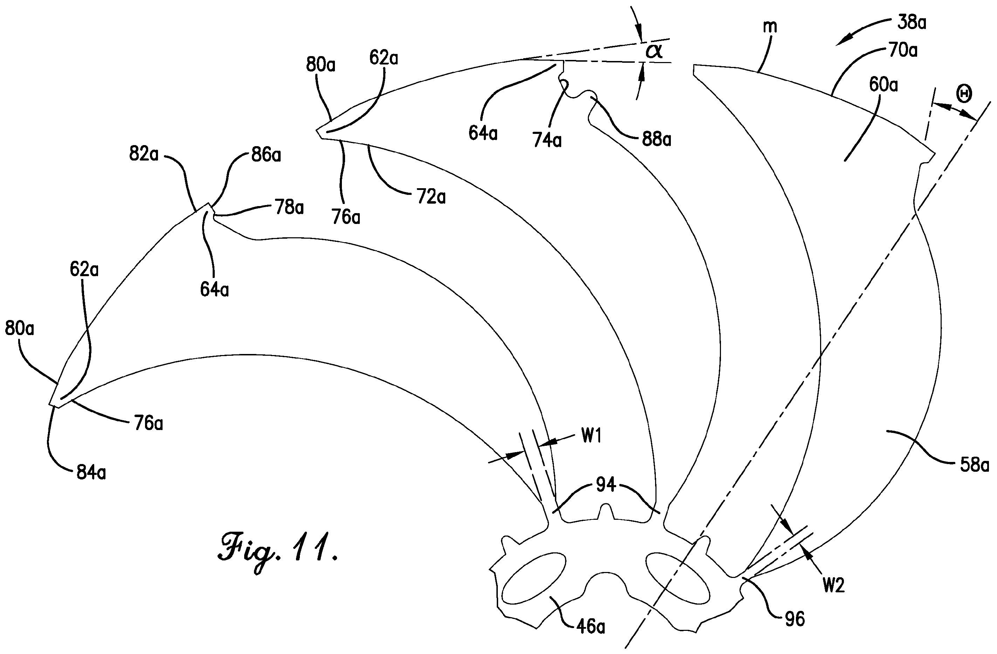

The radially outer side 70 of each head 60 preferably extends along an arc and, more preferably, along an arc of a circle. Most preferably, the radially outer sides 70 each extend along a circular radially outer margin M (see FIGS. 3 and 11) of the rotor core 38 and laminations 38a and share the radius of curvature of said outer margin M. That is, the radially outer sides 70 preferably extend along a circle having an axis that is coaxial with the axis of rotation of the rotor 12.

Preferably, each first side 72 of a given head 60 extends continuously with the first side face 66 of the corresponding body 58. That is, the first sides 72 preferably extend along the same arc as the corresponding first side faces 66.

In contrast, the second side 74 of each head 60 is preferably straight and extends away from the corresponding second side face 68 at an angle θ relative to radial. More particularly, as best shown in FIG. 11, the second side 74 is preferably angled at an angle θ between about fifteen (15) degrees and about thirty (30) degrees relative to a radial line, more preferably between about twenty (20) degrees and about twenty-five (25) degrees relative to radial, and most preferably about twenty-two (22) degrees from radial.

Referring to FIGS. 3, 10, and 11, the ears 62 and 64 of each pole segment 44 are preferably arcuately spaced apart from each other by the corresponding head 60. That is, each head 60 is preferably disposed between a corresponding pair of ears 62 and 64, each of which extends circumferentially or tangentially outwardly from the head 60. More particularly, the first ears 62 extend from the first side 72, and the second ears 64 extend from the second side 74.

Preferably, and with reference to FIG. 6, the first ears 62 include inner faces 76 that extend continuously with and along the same arc as the corresponding first side faces 66 of the bodies 58 and the first sides 72 of the heads 60. In contrast, the second ears 64 preferably include inner faces 78 that are angled relative to the second sides 74 of the corresponding heads 60. More particularly, the inner faces 78 are disposed slightly obliquely (and very nearly orthogonally) to the corresponding second sides 74.

In a preferred embodiment, the ears 62 and 64 also each include outer faces 80 and 82, respectively. The outer faces 80 and 82 are preferably straight and disposed inward of the margin M of the rotor 12. That is, the outer faces 62 and 64 angle inwardly from the outer margin M.

In a preferred embodiment, and as best shown in FIG. 11, the outer faces 80 and 82 (or 80a and 82a) angle inwardly from the outer margin M (or, more specifically from a line drawn tangent to the outer margin M) at an angle α of between about five (5) degrees and about thirteen (13) degrees, more preferably between about seven (7) degrees and about eleven (11) degrees, and most preferably about nine (9) degrees.

Each ear 62 and 64 additionally includes a corresponding side aspect 84 and 86. The side aspects 84 and 86 are preferably straight and at least substantially orthogonal to the outer faces 80 and 82.

Likewise, as best shown in FIG. 11, the first ear layer 62a of each pole segment body layer 58a presents inner and outer faces 76a and 80a, respectively, and side aspects 84a. The second ear layers 64a of each pole segment body layer 58a present inner and outer faces 78a and 82a, respectively, and side aspects 86a.

Each pole segment 44 additionally includes an axially and generally circumferentially or tangentially extending, axially discontinuous containment prong 88 (see FIG. 6). Each containment prong 88 comprises a plurality of axially spaced apart containment prong layers 88a of selected ones of the laminations 38a.

More particularly, in keeping with the above-described rotation and stacking pattern of the laminations 38a, a containment prong layer 88a extends from a given pole segment 44 at every fifth pole segment layer 44a (see, for instance, FIG. 6).

Furthermore, the first pole segment layer 44a in the stack of laminations 38a to include a containment prong layer 88a for the given pole segment 44 varies amongst the pole segments 44. For instance, in the illustrated embodiment, and as shown in FIGS. 3, 6, and others, a pole segment 44 for which the first or upper pole segment layer 44a includes the containment prong layer 88a is disposed arcuately between pole segments 44 for which the first pole segment layers 44a are devoid of a pole segment containment prong layer 88a. More particularly, the pole segment 44 immediately arcuately counterclockwise of the subject pole segment 44 (that has a containment prong layer 88a at the top lamination 38a) includes a pole segment containment prong layer 88a at the fourth lamination 38a from the top, and the pole segment 44 immediately arcuately clockwise of the subject pole segment 44 includes a pole segment containment prong layer 88a at the third lamination 38a from the top.

Finally, it is noted that the top and bottom ones of the laminations 38a present respective axially spaced apart top and bottom faces 90 and 92 of the rotor core 38 and connect the side faces 66 and 68 of the pole segment bodies 58, and the outer side and first and second sides 70, 72, and 74 of the heads 60.

With regard to potentially permissible variations to the rotor core, it is noted that extension along non-circular arcs by the side faces of the pole segments thereof is permissible according to some aspects of the present invention, as are varying relationships between the curvatures of the respective side faces. Furthermore, either or both side faces may extend along a path that includes multiple segments without departing from the scope of some aspects of the present invention. For instance, a given side face may extend along a first arc at a radially inner position and along a second, different arc at a radially outer position. One or more straight segments may also be provided in some embodiments, or variations in the radially outer sides of the pole segments may be permissible.

### Rotor Core Bridges

Turning now to the bridges 48, as noted previously, each lamination 38a preferably includes a plurality of bridges 48a. The axially stacked overlying bridges 48a cooperatively form the corresponding bridges 48 in a broad sense.

However, in contrast to conventional bridges, which extend uniformly along the axial extent of the associated rotor core, the bridges 48 of the present invention are axially nonuniform. Instead, the bridges 48 vary axially. More particularly, the bridges 48 vary in width (measured tangentially) along the axial length or height of the rotor core 38.

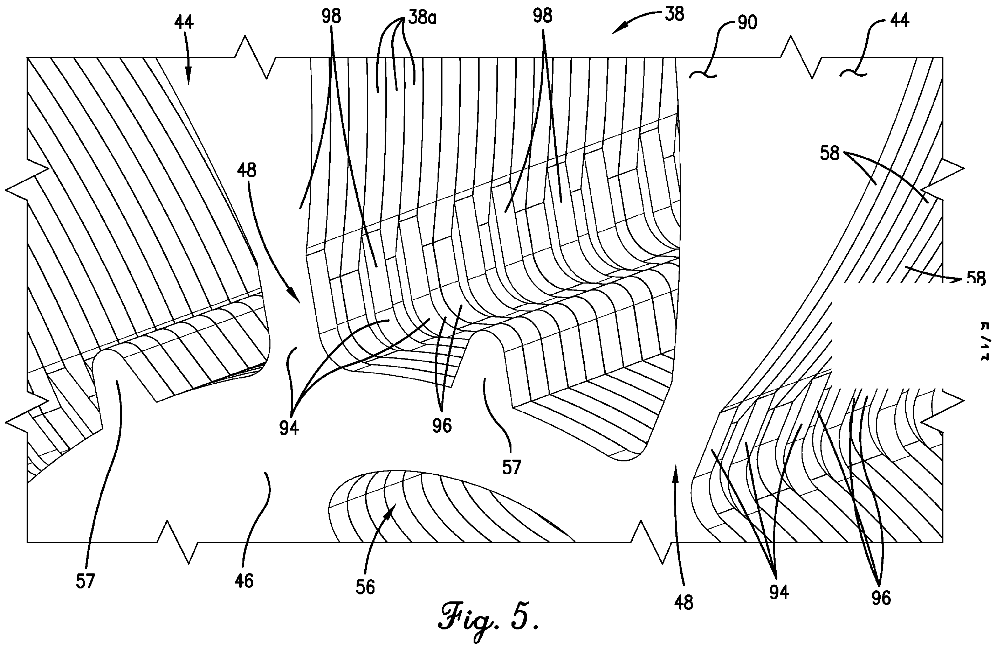

In greater detail still, each lamination 38a includes various types of bridge layers 48a. More particularly, as best shown in FIGS. 5, 10, and 11, each lamination 38a includes a plurality of wide bridge layers 94 and a plurality of narrow bridge layers 96. In the illustrated embodiment, the bridge layers 48a of each lamination 38a are arranged in an arcuate pattern comprising two (2) wide bridge layers 94 followed by three (3) narrow bridge layers 96, with the pattern then repeating once. A total of two (2) patterns are thus present around the circumference of each lamination 38a, corresponding to ten (10) bridge layers 48a.

As noted previously, each lamination 38a is preferably rotated relative to adjacent ones of the laminations 38a by about one hundred eight (108) degrees, or three (3) poles. This results in a wide-narrow-narrow-wide-narrow (W-N-N-W-N) axial pattern of bridge layer thicknesses. That is, in an axial direction, a wide bridge layer 94 is followed by a pair of narrow bridge layers 96, and thereafter another wide bridge layer 94 and another narrow bridge layer 96 (that is, bridge layers 94-96-96-94-96). The pattern then repeats (W-N-N-W-N | W- N-N-W-N | W-N-N-[...], or 94-96-96-94-96 | 94-96-96-94-96 | 94-96-96-[...]).

As will be readily apparent to those of ordinary skill in the art, the axial starting point of the pattern will vary arcuately from one bridge 48 to the next due to the arcuate variation in bridge widths for a given lamination 38a and the rotation of the laminations 38a relative to one another. That is, adjacent ones of the bridges 48 are non-congruent with each other (non-identical; not having both the same size and shape).

For instance, whereas the left bridge 48 in FIG. 5 begins the repeating W-N-N-W-N pattern with the first lamination 38a, the right bridge 48 begins partway through the pattern, at the fourth element (that is, the second "wide"). The "start" of the W-N-N-W-N pattern can be found at the third lamination 38a from the top. Thus, the bridge layers 48a of the right bridge 48 are arranged as W-N | W-N-N-W-N | W-N-N-[...], or as layers 94-96 | 94-96-96-94-96 | 94-96-96-[...]).

Compared to a uniform bridge dimension, alternating between different sizes (that is, wide bridge layers 94 and narrow bridge layers 96) can decrease flux leakage (a reduction in width reduces leakage through the given bridge layer 48a) and improve mechanical and electromagnetic properties. Motor performance is thereby improved in a broad sense, without sacrificing structural strength and without substantial increase in cost.

It is noted that the preferred pattern described above may be understood to correlate to a series of I-beam structures 98 spaced axially apart from one another by respective intermediary narrow bridge layers 96. (This is perhaps best shown in FIG. 5.) That is, each set or series of bridge layers 94-96-96-94 (W-N-N-W) forms an I-beam structure 98, with the repeated I-beam structures 98 formed by the bridge layers 48a providing strength and stiffness to the bridge 48 while decreasing bulk (and in turn decreasing both material costs and flux leakage).

In a preferred embodiment, and as best shown in FIG. 11, the wide bridge layers 94 have a width W1between about one and one tenth (1.1) and about two (2) times the width W2 of the narrow bridge layers 96. More preferably, the wide bridge layers 94 have a width W1 between about one and twenty-five hundredths (1.25) and about one and seventy-five hundredths (1.75) times the width W2 of the narrow bridge layers 96. Most preferably, the wide bridge layers 94 have a width W1 of about one and five tenths (1.5) times the width W2 of the narrow bridge layers 96.

In the illustrated embodiment, for instance, the wide bridge layers 94 preferably have a width W1 of about forty-one thousandths (0.041) inch. The narrow bridge layers 96 preferably have a width W2 of about twenty-seven thousandths (0.027) inch.

It is noted that the average width or thickness of a given bridge 48 in the illustrated embodiment, as based on the varying widths and assigned pattern of the associated bridge layers 48a, is greater than a corresponding baseline uniform bridge width. This results in improved stiffness. In the illustrated embodiment, for instance, the average bridge width or thickness is about three hundred twenty-six ten thousandths (0.0326) of an inch, in contrast to a corresponding baseline uniform width or thickness of about three hundred fifty ten thousandths (0.0350) of an inch.

In the illustrated embodiment of the present invention, the pole segments 44 are arcuately spaced from one another along the radial extents thereof. However, it is permissible according to some embodiments of the present invention for struts to extend between and interconnect some or all of the pole segments. Such struts may be straight or arcuate, and can be positioned along the respective pole segments at position, provided interference with magnets or other components is avoided. Most preferably, however, any struts are disposed at or adjacent the radially outer margin of the rotor (so as to extend between the ears of adjacent pole segments, for instance).

A given strut may extend continuously the entire axial height of the rotor or continuously along only a portion of the axial height. Discontinuities are also permissible. For instance, in one embodiment, the struts may be comprised of a plurality of axially spaced apart strut layers, each of which corresponds to one of the rotor laminations. For instance, similarly to the containment prong layers 88a, a strut layer might extend from a given pole segment at every fifth pole segment layer.

The struts may also vary arcuately. For instance, in keeping with the above-described rotation and stacking pattern of the laminations 38a, and corresponding again to the containment prong layers 88a, the first pole segment layer 44a in the stack of laminations 38a to include a strut layer for the given pole segment 44 may amongst the pole segments 44. For instance, a pole segment for which the first or upper pole segment layer includes a strut layer may be disposed arcuately between pole segments 44 for which the first pole segment layers are devoid of a pole segment containment prong layer. More particularly, the pole segment immediately arcuately counterclockwise of the subject pole segment (that has a strut layer at the top lamination) includes a pole segment containment prong layer at the fourth lamination from the top, and the pole segment immediately arcuately clockwise of the subject pole segment includes a strut layer at the third lamination from the top.

Again, however, it is noted that struts may be alternatively configured or omitted entirely.

### Magnets

With reference to FIG. 6, each pair of adjacent pole segments 44 preferably defines a slot 100 therebetween. Each slot 100 includes a magnet-receiving portion 102 and a gap portion 104. The magnets 40 are each at least in part received in the magnet-receiving portion 102 of a corresponding one of the slots 100, with the corresponding gap portion 104 being devoid of the corresponding magnet 40. In the illustrated embodiment, the magnet retention nubs 57 extend into the corresponding slots 100 between or at an interface between the magnet- receiving portions 102 and gaps 104 thereof.

Similarly, with reference to FIG. 10, the pole segment layers 44a define slot layers 100a therebetween, with the slot layers 100a including magnet-receiving portion layers 102a and gap layer portions 104a.

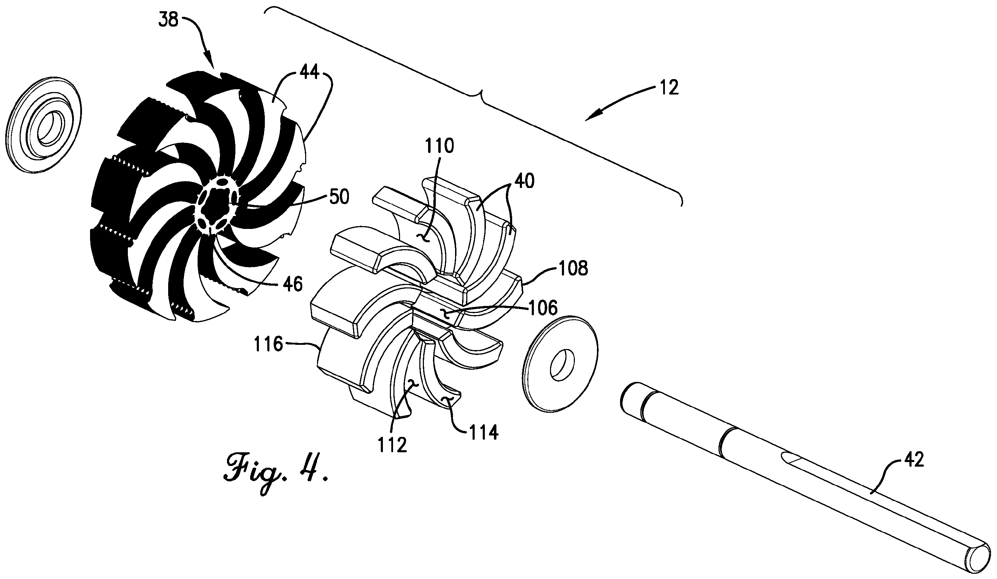

Each magnet 40 is preferably generally shaped in a curved or "swept" rectangular manner, in keeping with the curvature of the corresponding slot 100 as at least in part defined by the faces 66, 68, 72, and 74 of the defining pole segments 44. More particularly, with reference to FIG. 4, each magnet 40 preferably includes a radially inner end face 106, a radially outer end face 108, an axially extending inner curved face 110 facing generally radially inwardly, an axially extending outer curved face 112 facing generally radially outwardly, and top and bottom faces 114 and 116.

Most preferably, the inner curved face 110 has a curvature corresponding to that of the adjacent pole segment body second side face 68, whereas the outer curved face 112 has a curvature corresponding to that of the adjacent pole segment body first side face 66. The magnet width also preferably corresponds to the width of the corresponding slot 100, such that the magnet 40 engages each of the adjacent pole segments 44 at least along the side faces 66 and 68.

It is noted that, in a broad sense, the shapes of the magnets 40 correspond to the shape(s) of the pole segments 44 or, alternatively described, to the shape(s) of the slots 100 therebetween. That is, the magnets 40 and the pole segments 44 are complementarily configured.

As will be readily apparent to those of ordinary skill in the art, the length of interface between the magnets 40 and the pole segments 44 is, by merit of the curved shapes of overlying faces thereof, longer than in a conventional rotor having an equivalent outer diameter but straight-sided, rectangular magnets engaging plane-sided pole segments. In a practical sense, the increased relative length facilitates a greater magnet-to-pole segment interface area for each magnet 40 compared to that conventionally achieved in the same motor envelope. As will be readily apparent to those of ordinary skill in the art, the increased magnet-to-pole segment interface facilitates improved flux concentration.

Although continuous curvature of each magnet 40 is preferred, magnets having varying curvature and/or one or more straight portions fall within the scope of some aspects of the present invention.

### Symmetrical Motor Performance and High Flux Concentration

The above-described geometry of the pole segments 44 (and, in turn, the magnets 40 disposed therebetween) is essential to at least some aspects of motor operation. For instance, a rotor 12 featuring pole segments 44 and other elements configured as described above performs at least substantially identically in operation in both forward and reverse directions, despite a lack of conventional mirror symmetry along the pole boundary. That is, despite being geometrically asymmetrical in some aspects, the motor 10 in operation produces both a symmetrical flux distribution across the air gap (that is, a gap 118 between the stator 14 and the rotor 12, as shown in FIG. 2) and a symmetrical inductance profile. Alternatively stated, each of the flux distribution and the inductance profile for one electrical cycle are nearly identical in both directions.

It is noted that the phrase "mirror symmetry" as used herein may also be referred to as "reflection symmetry" and refers to a form of symmetry in which a straight line divides an object into two coincidental parts. That is, the parts would overlie each other perfectly if "folded" over the line. Such line is conventionally referred to as a line of symmetry. This type of symmetry may also be referred to as bilateral symmetry.

The phrase "radial symmetry" or "rotational symmetry" as used herein refers to symmetry dependent on rotation of an object about an axis or origin. In simple terms, the object could hypothetically be cut into a plurality of equal-sized slices that, when rotated about the axis to overlie each other, are found to be identical. The arcuate size of the slices corresponds to the associated "angle of rotation" of the rotation of the symmetry.

Turning again to motor operation features, the present design enables forward and reverse operation without significant changes in noise (that is, without significant changes in induced harmonics), without control instability or other difficulties, without performance irregularities, and without increased limitations on operating conditions. That is, performance and sound testing identify no discernable difference between operational directions. Still further, no changes in control parameters are needed to facilitate operation in one direction versus the other.

It is particularly noted that, although certain variations in rotor geometry fall within the scope of some aspects of the present invention, the novel relationships and geometries described above collectively and unexpectedly enable symmetrical motor operation. That is, despite the geometric asymmetries and irregularities of the rotor 12-and as a result of the unique geometrical features of and relationships between the rotor components-the motor 10 achieves symmetrical operation.

The above-described design is also highly advantageous by achieving significant flux concentration without increasing the motor envelope (for instance, via a greater stack height), without requiring the use of upgraded materials (for example, neodymium magnets and/or aluminum stator wiring), and/or without utilizing added active materials (such as copper or steel). For instance, in comparison to an otherwise similarly configured and sized conventional spoked rotor motor, the motor 10 of the illustrated embodiment enables improved stator tooth flux density, significantly increased maximum rotor pole face flux density, and higher back electromotive force (BEMF).

In summary, the present asymmetrical rotor design allows for higher flux concentration levels compared to traditional designs, while having no discernable differences in performance, sound, and vibration levels while operating in either direction, and without relying on expensive material upgrades and/or additions.

### Stator Core

As shown in FIG. 2, and as noted previously, the stator 14 includes the stator core 24 and the plurality of coil assemblies 30 mounted to the stator core 24.

As shown in FIGS. 12 and 13, the stator core 24 is formed from a plurality of axially stacked laminations 24a.

Most preferably, as illustrated, the stator core 24 is a full round stator core 24, comprising laminations 24a punched in a full toroid. That is, each lamination is punched in a full three hundred sixty (360) degree manner, with no further processing or assembly required to obtain its annular shape. (Additional processing may nevertheless be done, but the general annular shape is achieved via the initial punching process.) It is particularly noted that the term "full round" does not indicate perfect "roundness" or circularity, instead simply referring to arcuate extent during formation. In the illustrated embodiment, for instance, the outer perimeter of each stator core lamination includes several flat or straight regions in addition to arcs of a circle.

Although a full round construction is most preferred, it is permissible according to some aspects of the present invention for the stator core to be alternatively constructed. For instance, the stator core might be formed from punched linear bar laminations that are thereafter formed into curves, be solidly constructed, or comprise a plurality of interconnected arcuate segments.

The stator core 24 is preferably generally toroidal in form. More particularly, the stator core 24 presents radially inner and outer circumferential faces 120 and 122, respectively, with the inner face 120 defining a central aperture 124.

The core 24 preferably includes the aforementioned circumferentially extending yoke 26 and the aforementioned plurality of radially projecting teeth 28 extending generally radially inwardly from the yoke 26. Each tooth 28 preferably comprises an arm 130 and a crown 132.

The yoke 26 preferably extends at least substantially continuously and presents the outer circumferential face 122. In the illustrated embodiment, for instance, the yoke 26 extends uninterrupted except by arcuately spaced apart fastener-receiving openings 134 extending axially therethrough.

The teeth 28, including the arms 130 and the crowns 132, are arcuately spaced apart to define slots 136 therebetween. Each tooth 28 preferably presents an upper face 138, a lower face 140, and two side faces 142, although alternative tooth shapes are permissible within the scope of the present invention.

The yoke 26 likewise presents upper and lower faces 144 and 146, respectively, which are continuous with the upper and lower tooth faces 138 and 140.

The crowns 132 of the teeth 28 collectively present the inner circumferential face 120, which is thus discontinuous.

A discontinuous intermediate face 148, defined radially between the inner and outer circumferential faces 120 and 122, is defined by the yoke 26. More particularly, the intermediate face 148 is interrupted by the teeth 28, which project therefrom.

The stator core 24 preferably comprises a ferromagnetic material such as steel. However, it is within the ambit of the invention for the core 24 to comprise an alternative material.

As will be readily apparent to those having ordinary skill in the art, high power density motor designs are subject to high forces which potentially distort components while operating, causing noise. Furthermore, some applications (such as HVAC) are sensitive to sound and vibration issues. It is therefore desirable that certain motors, such as the motor 10, feature stators that are resistant to distortion, vibration, and other negative motor effects. As will be discussed in greater detail below, the stator 24 achieves these goals.

More particularly, the relative dimensions and features of the present stator core 24 are advantageously cooperatively optimized for improved stator stiffness and reduced noise and vibration. More particularly, the present stator 14 includes unintuitive dimensioning of select features, resulting in improved stator performance.

As best shown in FIG. 13, for instance, each stator tooth side face 142 is interconnected with the adjacent portion of the intermediate face 148 of the yoke 26 by a tooth radius R_T. Whereas such radius in a conventional design is simply a small, tight curve to facilitate ease of manufacturing while still maximizing winding area, the illustrated tooth radius R_T is large. For instance, a ratio of the tooth radius R_T to stator core radius R_C is preferably greater than about forty thousandths (0.040), more preferably greater than about fifty thousandths (0.050), and most preferably about fifty-five thousandths (0.055).

The tooth radius R_T may also be understood in the context of a generally tangential stator tooth width W_T between the sides 142, with a ratio of the tooth radius R_T to the tooth width W_T preferably being greater than about thirty-five hundredths (0.35), more preferably greater than about forty hundredths (0.40), and most preferably about forty-two hundredths (0.42).

Still further, the tooth radius R_T may also be understood in the context of a generally radial stator tooth length L_T, comprising the lengths of the respective arm 130 and crown 132, with a ratio of the tooth radius R_T to the tooth length L_T preferably being between greater than about fifteen hundredths (0.15), more preferably greater than about twenty hundredths (0.20), and most preferably about twenty-five hundredths (0.25).

Nominally, the tooth radius R_T is preferably about fifteen hundredths (0.15) inch, the stator tooth width W_T is about three hundred fifty-four thousandths (0.354) inch, and the stator tooth length L_T is about five hundred eight nine thousandths (0.589) inch. The stator core radius R_C is about two and seven hundred forty-five thousandths (2.745) inch.

Provision of comparatively large tooth radii R_T facilitates numerous advantages. For instance, side-to-side bending of each stator tooth 28 is resisted; and stator hoop strength is increased through resistance of a two (2)-lobe bending mode.

The stator core 24 also presents an unconventionally thick yoke 26. That is, the yoke 26 presents a radial yoke thickness T_Y between the outer circumferential surface 122 and the intermediate surface 148 that is unconventionally large relative to the stator tooth length L_T, and other stator dimensions. In a preferred embodiment, for instance, a ratio of the yoke thickness T_Y to the stator tooth length L_T is preferably greater than about thirty-five hundredths (0.35), more preferably greater than about forty hundredths (0.40), and most preferably about forty-eight hundredths (0.48). Such relative dimensions contrast significantly with a conventional stator, in which a far lower yoke width to tooth length ratio would be typical.

The yoke thickness T_Y may also be understood in the context of a radial stator core thickness T_C defined between the radially inner and outer stator core faces 120 and 122 (or corresponding radially inner and outer margins 150 and 152 of the stator core 2). In a preferred embodiment, for instance the yoke thickness T_Y is at least about twenty hundredths (0.20) times the stator core thickness T_C, more preferably at least about twenty-five hundredths (0.25) times the stator core thickness T_C, and most preferably about thirty-three hundredths (0.33) times the stator core thickness T_C.

Nominally, the yoke thickness T_Y is about two hundred eight five thousandths (0.285) inch, and the stator core thickness T_C is about eight hundred seventy-four thousandths (0.874) inch.

Similarly to provision of comparatively large tooth radii R_T, provision of a thicker yoke 26 facilitates numerous advantages. For instance, the stator hoop strength is increased through resistance of a two (2)-lobe bending mode.

Finally, it is noted that provision of a full-round stator 14, as noted above, facilitates uniform contact between the stator core 24 and the housing 16. Definition of a consistent air- gap 118 (see FIG. 2) between the stator 14 and the rotor 12 is also facilitated.

### Conclusion

The preferred forms of the invention described above are to be used as illustration only and should not be utilized in a limiting sense in interpreting the scope of the present invention. Obvious modifications to the exemplary embodiments, as hereinabove set forth, could be readily made by those skilled in the art without departing from the spirit of the present invention.

Although the above description presents features of preferred embodiments of the present invention, other preferred embodiments may also be created in keeping with the principles of the invention. Furthermore, as noted previously, these other preferred embodiments may in some instances be realized through a combination of features compatible for use together despite having been presented independently as part of separate embodiments in the above description.

## Claims

1. A rotor for use in an electric motor and rotatable about an axis, said rotor comprising:
a core including a hub, a plurality of pole segments arranged arcuately about the axis, and a plurality of bridges extending between and interconnecting respective ones of the pole segments to the hub; and
a plurality of arcuately arranged magnets alternating arcuately with said pole segments, such that each of the magnets is at least in part interposed between a pair of adjacent pole segments,
each of said bridges having an axially varying width.

2. The rotor of claim 1,
said core presenting axially spaced apart top and bottom faces,
each of said bridges extending continuously from said top face to said bottom face.

3. The rotor of claim 1,
said core comprising a plurality of axially stacked laminations,
each of said bridges comprising a plurality of axially stacked bridge layers,
each of said bridge layers being formed by a corresponding one of the laminations.

4. The rotor of claim 3,
said bridge layers including a plurality of wide bridge layers having a first width and a plurality of narrow bridge layers having a second width,
said first width being greater than said second width.

5. The rotor of claim 4,
said laminations arranged such that the bridge layers of each of said bridges form a pattern, said pattern including, in an axial direction, a wide bridge layer followed by a pair of narrow bridge layers, and thereafter another wide bridge layer and another narrow bridge layer.

6. The rotor of claim 5,
said pattern being an axially repeating pattern.

7. The rotor of claim 4,
said first width being between about 1.25 times to about 1.75 times greater than said second width.

8. The rotor of claim 7,
said first width being about 1.5 times greater than said second width.

9. The rotor of claim 4,
each of said laminations including, in an arcuate direction, two wide bridge layers followed by three narrow bridge layers.

10. The rotor of claim 4,
said laminations being congruent with each other,
each of said laminations being rotated about the axis relative to adjacent ones of the laminations.

11. The rotor of claim 10,
adjacent ones of said laminations being rotationally offset from another by three poles.

12. The rotor of claim 4
each of said laminations exhibiting rotational symmetry within itself.

13. The rotor of claim 12,
each of said laminations exhibiting rotational symmetry within itself at 180 degrees of rotation.

14. The rotor of claim 1,
arcuately adjacent ones of said bridges being non-congruent.

15. A symmetrically performing motor comprising:
a rotor rotatable about an axis and including a rotor core and a plurality of magnets,
said core including a plurality of pole segments arranged arcuately about the axis,
said pole segments cooperatively defining a cylindrical outer rotor margin,
each of said pole segments extending arcuately from a radially inner pole segment midpoint to a radially outer pole segment midpoint, with said radially inner and radially outer pole segment midpoints being angularly offset from each other such that the pole segments are swept in form and the rotor core exhibits mirror asymmetry,
said magnets alternating arcuately with said pole segments, such that each of the magnets is at least in part interposed between a pair of adjacent pole segments,
each of said magnets extending arcuately from a radially inner magnet midpoint to a radially outer magnet midpoint, with said radially inner and radially magnet midpoints being angularly offset from each other such that the magnets are curved in form,
each of said pole segments including a body, a head disposed radially adjacent the body, and a pair of arcuately spaced apart ears extending generally tangentially outwardly from the head,
said head defining an arcuate outer head face extending along the outer rotor margin,
each of said ears defining a respective outer ear face disposed inward of the outer rotor margin,
each of said outer ear faces defining an ear angle relative to the outer rotor margin,
said ear angle being between about 5 degrees and about 13 degrees,
said pole segments and said magnets cooperatively facilitating operation of the motor in both forward and reverse directions with at least substantially identical performance.

16. The symmetrically performing motor of claim 15, further comprising: a stator including a stator core and a plurality of coils wound about the stator core, said stator core including -
a generally toroidal yoke presenting a radially outer margin of the stator core,
and a plurality of teeth extending generally radially from the yoke and cooperatively
presenting a radially inner margin of the stator core,
said stator core having a radial stator core thickness between the radially inner and outer margins of the stator core,
said yoke presenting a radially inner yoke face and having a radial yoke thickness between the radially inner yoke face and the radially outer margin of the stator core,
said yoke thickness being at least one fourth the stator core thickness.

17. The symmetrically performing motor of claim 15, further comprising: a stator including a stator core and a plurality of coils wound about the stator core,
said stator core including a generally toroidal yoke and a plurality of teeth extending generally radially from the yoke,
each of said teeth including -
an arm extending from the yoke to define an interception therewith,
and a crown extending generally arcuately from the arm, opposite the yoke, said arm having a generally tangential width,
said arm defining a radius at the intersection that at least one fourth the width.

18. The symmetrically performing motor of claim 15,
said rotor core comprising a plurality of axially stacked laminations,
each of said laminations exhibiting rotational symmetry within itself at least at 180 degrees.

19. The symmetrically performing motor of claim 15,
said rotor core further including a hub and plurality of bridges extending between and interconnecting respective ones of the pole segments to the hub,
each of said bridges having an axially varying width.
